# DEMANDE DE BREVET EUROPEEN

(11) **EP 0 732 438 A1**
(43) Date de publication de la demande: **18.09.1996**
(21) Numéro de dépôt: 95401823.0
(22) Date de dépôt: 03.08.1995
(51) Int. Cl.: D06F 37/30, G01P 3/488, H02K 9/06

(54) **Dispositif incorporé à un moteur électrique pour lave-linge, lave-vaisselle ou analogue**

(30) Priorité: 13.03.1995 ES 9500657 U
(71) Demandeur: ZERTAN, S.A., E-31200 Estella, Navarra (ES)
(72) Inventeur: Frechilla Manso, Oscar, E-31016 Pamplona (ES)
(74) Mandataire: Hasenrader, Hubert

(57) **Abrégé**

Dans ce dispositif, en remplacement d'une dynamo tachymétrique extérieure, on utilise une denture (5) formée sur le ventilateur (4), au droit de laquelle est placé un détecteur (6) qui capte le passage des formations de la denture pendant la rotation du moteur (1) pour produire un signal qui est transmis au régulateur (2) chargé de rendre la vitesse de rotation conforme à la programmation établie, le ventilateur (4) et le détecteur (6) étant placés à l'intérieur de la carcasse générale du moteur (1) à laquelle ces organes sont incorporés.

## Description

Dans certains appareils comme, par exemple, les lave-linge, les lave-vaisselle et autres appareils analogues, le processus de travail a été prévu pour se dérouler avec certaines vitesses déterminées du moteur, selon les différentes phases de la séquence fonctionnelle, ce qui est commandé par les différents états de connexion qui sont établis par un programmateur.

Pour cela, la vitesse du moteur est commandée, au moyen d'un régulateur qui, en fonction d'un signal indicatif de la vitesse du moteur, règle à chaque instant cette vitesse sur la valeur prescrite par la programmation établie.

Dans les solutions classiques, ce signal indicatif du nombre de tours de l'arbre du moteur et, par conséquent, de la vitesse de fonctionnement du moteur, est obtenu à l'aide d'une dynamo tachymétrique accouplée à l'arbre du moteur, ou bien au moyen d'un codeur optique associé à l'arbre du moteur, cet organe étant connecté à une boîte extérieure où se trouve le régulateur, ces solutions nécessitant un montage difficile et coûteux des éléments qui, en outre, gêne l'installation du moteur en raison de l'espace que ces éléments de détection de la vitesse du moteur occupent à l'extérieur.

L'invention propose une nouvelle solution de détection de la vitesse des moteurs précités, basée sur un dispositif avec lequel on obtient des caractéristiques de fonctionnement et de montage beaucoup plus avantageuses que celles des constructions classiques.

Ce dispositif objet de l'invention consiste essentiellement dans la formation d'une denture sur le ventilateur du moteur, et dans l'incorporation d'un élément détecteur du passage de ladite denture, pour produire un signal correspondant qui, envoyé au régulateur, provoque la correction nécessaire pour le réglage de la vitesse.

On obtient de cette façon une réalisation extrêmement simple et pratique, puisqu'on tire parti d'un élément appartenant en propre à la composition du moteur et parce que le dispositif détecteur de la vitesse est situé dans une disposition à l'intérieur du bloc du moteur, sans que ceci n'entraîne de gêne ni de difficulté pour son montage ; ce dispositif détecteur peut être un simple capteur optique ou magnétique qui peut être incorporé facilement dans le volume intérieur du bloc moteur, ou dans le régulateur dans le cas ou ce régulateur est placé sur le moteur.

En outre, cet agencement du dispositif détecteur de vitesse et la nature même de ce dispositif permettent au signal provenant de ce dispositif d'être transmis à un régulateur situé indépendamment, comme dans les solutions classiques, ou encore permettant de monter directement le régulateur sur la partie arrière du bloc moteur qui, maintenant, est libre sans que cette occupation ne soit préjudiciable puisque la réalisation sous forme de circuit imprimé a pour effet que le régulateur n'affecte pas notablement les dimensions de l'ensemble.

D'autres caractéristiques et avantages de l'invention apparaîtront à la lecture de la description qui va suivre, d'un exemple de réalisation et en se référant aux dessins annexés sur lesquels :
la figure 1 représente schématiquement un moteur avec la solution classique de dynamo tachymétrique comme moyen détecteur de la vitesse de rotation ;
les figures 2 et 3 montrent la représentation schématique d'un moteur avec la solution selon l'invention, respectivement avec le régulateur indépendant du bloc moteur et avec ce régulateur disposé sur le bloc moteur ;
la figure 4 est une vue en perspective de l'ensemble prévu pour la détection de la vitesse de rotation du moteur conformément au dispositif selon l'invention ;

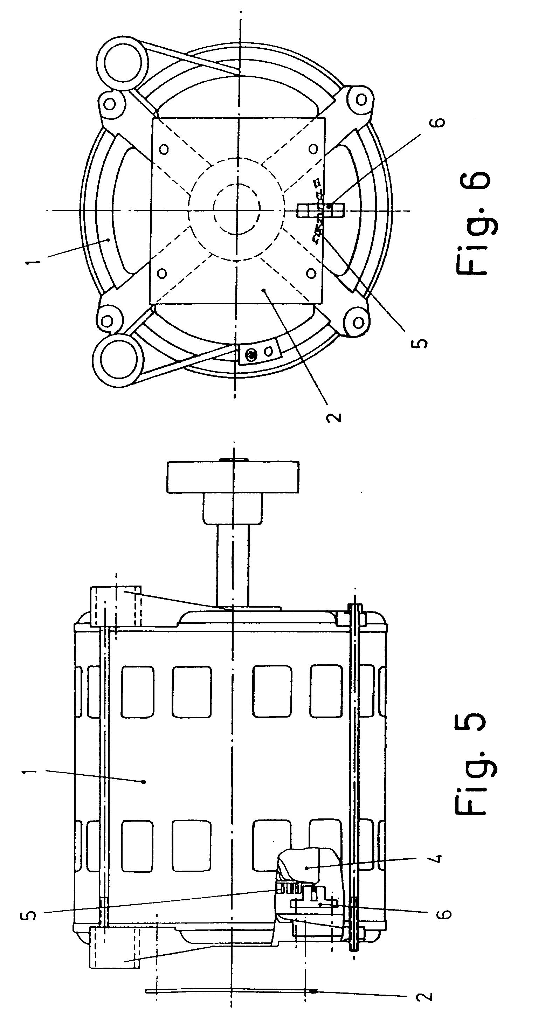

les figures 5 et 6 sont des vues correspondantes en élévation de côté et de l'arrière, d'un moteur équipé du dispositif selon l'invention.

L'invention a pour objet un dispositif utilisé dans un moteur électrique de lave-linge, de lave-vaisselle ou analogue, associé en particulier à des moyens prévus pour commander la vitesse de rotation du moteur 1 correspondant, afin que ladite vitesse se règle sur les valeurs prescrites conformément à la programmation établie, lesquels moyens se basent sur la détection de la vitesse de rotation du moteur 1, en créant un signal qui se transmet à un régulateur 2 chargé d'effectuer les réglages nécessaires pour ramerner la vitesse à la valeur prescrite.

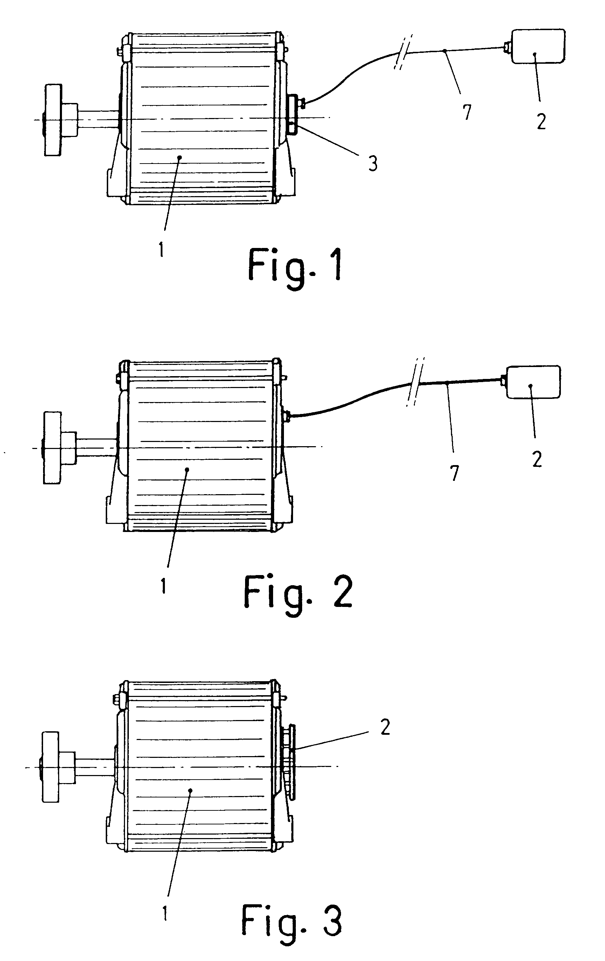

Avec le dispositif selon l'invention, on apporte une solution plus avantageuse que celle des constructions classiques qui sont basées sur l'incorporation d'une dynamo tachymétrique 3 ou d'un organe analogue, en montage extérieur sur l'arbre du moteur 1 à commander, comme on l'observe sur la figure 1, pour obtenir le signal détecteur de la rotation qui doit être transmis au régulateur 2.

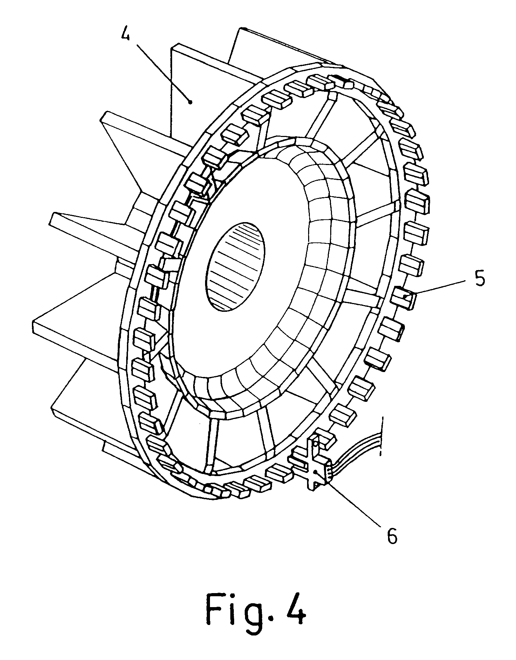

Dans le dispositif selon l'invention, la solution adoptée consiste à munir le ventilateur 4 du moteur 1 d'une denture 5, représentée sur la figure 4, et à placer au droit de cette denture 5, un élément 6 servant à détecter le passage des formations de cette denture.

Ledit élément détecteur 6 peut être un simple interrupteur optique et, dans ce cas, la denture 5 peut être formée de la matière plastique constitutive du ventilateur 4, de sorte qu'on l'obtient directement par le moulage de ce ventilateur ; toutefois, ladite denture 5 pourrait aussi être composée de formations métalliques rapportées sur le ventilateur 4 et, dans ce cas, l'élément 6 pourrait être un capteur magnétique capable de détecter le passage de ces formations.

Dans chaque cas, avec cette solution selon l'invention de l'agencement des moyens détecteurs de la vitesse de rotation qui ont été précités, ces moyens se trouvent à l'intérieur du bloc moteur 1 sans que leur présence ne provoque à l'extérieur de gênes ni encombrements susceptibles de rendre le montage plus difficile.

Aussi bien s'il s'agit de l'interruption d'un rayon lumineux que s'il s'agit d'une détection magnétique par effet "HALL", ou inductive, l'élément capteur 6 produit un signal résultant du passage des formations de la denture 5 pendant la rotation du moteur 1, ce signal étant envoyé, comme dans les solutions classiques, à un régulateur 2 qui, en fonction de ce signal, produit les corrections nécessaires pour rendre la vitesse égale à la valeur prescrite à chaque moment, conformément à la programmation établie.

Ce régulateur 2 peut être dans ce cas disposé indépendamment du bloc moteur 1, comme dans les solutions classiques, le signal du détecteur 6 se transmettant au régulateur par un câble conducteur 7, conformément au schéma de la figure 2.

Toutefois, étant donné que l'agencement des moyens détecteurs de la vitesse est dans ce cas à l'intérieur du bloc moteur 1 et que la partie arrière de ce bloc moteur est libre de tous autres éléments accessoires, le régulateur 2 peut également être monté directement sur la partie arrière précitée du bloc moteur 1, comme le montre la figure 3 ; sans que cet agencement n'entraîne la moindre gêne appréciable pour la réalisation du montage, puisque la possibilité de réaliser le régulateur 2 sous la forme d'un circuit imprimé a pour effet que l'agencement n'affecte pas sensiblement les dimensions, en réduisant le câblage aussi bien en nombre qu'en section. Il convient de signaler qu'on a prévu la possibilité pour ledit régulateur 2 de comporter le détecteur 6 incorporé dans le même circuit imprimé.

Il est à signaler que, logiquement, l'essence de l'invention n'est pas altérée par le fait que le nombre de pôles ou de dents qui forment la denture 5 peut varier avec la réalisation concrète de chaque cas, de même que le fait que lesdites dents peuvent avoir une conformation ou une disposition différente de celle représentée, de sorte que, par exemple, ces dents peuvent être situées dans un plan perpendiculaire à celui qu'elles occupent actuellement, auquel cas elles font saillie radialement sur la périphérie du ventilateur 4, elles peuvent aussi occuper n'importe quelle position possible, à laquelle la disposition du détecteur 6 s'adaptera logiquement.

Bien entendu, diverses modifications et variantes pourront être apportées au dispositif qui vient d'être décrit à titre d'exemple sans sortir du cadre de l'invention.

## Revendications

1. Dispositif perfectionné incorporé dans un moteur électrique (1) pour lave-linge, lave-vaisselle ou analogue, caractérisé en ce que le ventilateur (4) du moteur est muni d'une denture saillante (5) au droit de laquelle est placé un détecteur (6) capable de capter le passage des formations de ladite denture lorsque le moteur (1) tourne, pour produire, en fonction de cette rotation, un signal qui est transmis au régulateur correspondant (2) chargé de rendre la vitesse de rotation conforme à la programmation établie, le ventilateur (4) et le détecteur (6) étant tous deux placés à l'intérieur de la carcasse d'ensemble du moteur (1), avec lequel ces organes forment un tout unique.

2. Dispositif perfectionné incorporé dans un moteur électrique pour lave-linge, lave-vaisselle ou analogue, selon la revendication 1, caractérisé en ce que, dans une réalisation préférée, la denture (5) servant pour la détection de la rotation est constituée par la matière plastique même du ventilateur (4), et est obtenue par une construction monobloc avec ce dernier, par le moulage de celui-ci, tandis que le détecteur (6) est constitué par un capteur optique, qui émet un rayon lumineux qui s'interrompt au passage des formations de la denture (5).

3. Dispositif perfectionné incorporé dans un moteur électrique pour lave-linge, lave-vaisselle ou analogue, selon la revendication 1, caractérisé en ce que, selon une forme de réalisation, la denture prévue pour la détection de la rotation est formée par des formations métalliques rapportées sur le ventilateur (4), et en ce qu'on utilise comme détecteur (6) un capteur magnétique qui peut être activé par le passage desdites formations métalliques de la denture.

4. Dispositif perfectionné incorporé dans un moteur électrique pour lave-linge, lave-vaisselle ou analogue, selon la revendication 1, caractérisé en ce que le régulateur de vitesse (2), qui peut être réalisé sous la forme d'un circuit imprimé, peut être incorporé directement sur la partie arrière du bloc du moteur (1) à commander, le régulateur (2) comprenant dans ce cas l'élément détecteur (6) incorporé dans le même circuit imprimé.
